(19) **Europäisches Patentamt / European Patent Office / Office européen des brevets**

(11) **EP 3 886 495 A1**

(12) **EUROPEAN PATENT APPLICATION**

(43) Date of publication:
29.09.2021 Bulletin 2021/39

(51) Int Cl.:
*H04W 28/24* *(2009.01)*

(21) Application number: 20315065.1

(22) Date of filing: 27.03.2020

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Mitsubishi Electric R&D Centre Europe B.V.**
**1119 NS  Schiphol Rijk Amsterdam (NL)**
Designated Contracting States:
**FR**
• **Mitsubishi Electric Corporation**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventor: **Khanfouci, Mourad**
**35708 Rennes Cedex 7 (FR)**

(74) Representative: **Plasseraud IP**
**66, rue de la Chaussée d'Antin**
**75440 Paris Cedex 09 (FR)**

(54) **NG-RAN BASED PROACTIVE PERFORMANCE CALCULATIONS**

(57) The disclosure relates to a method for determining a quality of service parameter for at least one given terminal according to a given topology configuration of a radio access network system (NG-RAN) comprising a plurality of interconnected base stations (NB), each base station being configured to communicate with a corresponding group of terminals (UE) according to the given topology configuration, the method comprising, at a base station, upon obtaining a quality of service parameter request from a transmitting entity:
- obtaining (S4) for each of the at least one given terminal a signal-to-noise interference ratio extrapolated based on a reference signal quality parameter indicating a quality of a reference signal received by said given terminal according to the given topology configuration,
- obtaining (S5) a type of optimization problem, selected from a set of predefined types of optimization problem, selecting being based on each obtained extrapolated signal-to-noise interference ratio,
- determining the quality of service parameter based on solving (S6) the obtained type of optimization problem, and
- transmitting (S7, S9) the determined quality of service parameter to a receiving entity.

Figure 2

OBT QoS MSG — S1
OBT CFG INFO — S2
OBT MSR/UE — S3
OBT EXTR SINR — S4
OBT SLC OP — S5
SLV OPT — S6
TRANS SOL — S7
P-PROC SOL — S8 / TRIG TPLG CFG
TRANS P-PROC — S9 / S10

**FIG. 2**

**Description**

DOMAIN

The disclosure belongs to the field of telecommunications.

In particular, methods for determining quality of service parameters are disclosed hereinafter, as well as computer readable storage media, computer programs and base stations implementing such methods.

BACKGROUND

5G NR (new radio) is a new radio access technology developed by the 3rd Generation Partnership Project (3GPP) for the 5th generation mobile network. 5G NR is based on a next-generation radio access network (NG-RAN) coupled with a 5G core network.

The state of the art NG-RAN base stations design does not allow for *on demand query* of the base station capabilities.

A quality of service (QoS) profile is setup by the control plane node of the 5G core network, i.e. policy control function (PCF), transmitted to the session management function (SMF) that enforce the quality of service profile by selecting the user plane function (UPF) and by transmitting the QoS profile for QoS enforcement to the base stations of the NG-RAN (gNBs) and to the user terminals (UEs) through the access and mobility management function (AMF).

The base stations of the NG-RAN respond if they are able or not able to fulfil the profile for a given packet data unit (PDU) session. In the state of the art, the 5G core network is not aware of the radio capabilities of the NG-RAN and so, back and forth signalling is needed to configure the NG-RAN to the QoS profile.

It is proposed, in the co-pending patent application EP 20305195.8 of the applicant, to generate a query message that shall be transmitted by a time sensitive network application function entity (TSN-AF) to the radio access network (NG-RAN).

Such a query message is intended to query the NG-RAN to transmit its capabilities in terms of throughput, delay, etc.

These capabilities shall be exposed to a central network controller (CNC) of a time sensitive network TSN in order to determine an equivalent bridge representation of the 5G system (5GS) viewed as a TSN bridge and in order to trigger calculations of a centralized scheduling for the TSN network by the central network controller.

So there is a need to a method for processing a quality of service (QoS) query message.

Such a method shall be executable by one or more base stations of the NG-RAN.

Such a method shall allow proactively evaluating a radio parameter range requested by the query message, that is, evaluating said radio parameter range prior to establishing further communications between the user terminals and the base stations.

Such a method shall further allow exposing the evaluated range as well as related parameters to an external TSN application function (TSN-AF).

Such a method shall not be restricted to a specific scheduling or to a specific radio configuration of the NG-RAN base stations.

Such a method shall also be implementable, for example, in specific packet data unit (PDU) probing sessions for probing the NG-RAN.

SUMMARY

The invention is defined by the appended independent claims. Additional features and advantages of the concepts herein disclosed are set forth in the description which follows.

The present disclosure aims at improving the situation.

To this end, the present disclosure describes a method for determining a quality of service parameter for at least one given terminal in a radio access network system (NG-RAN) comprising a plurality of interconnected base stations (NB), each base station being configured to communicate with a corresponding group of terminals (UE) according to a given topology configuration, the method comprising, at a base station, upon obtaining a quality of service parameter request from a transmitting entity:

- obtaining for each of the at least one given terminal a signal-to-noise interference ratio extrapolated based on a reference signal quality parameter indicating a quality of a probing reference signal received by said given terminal according to the given topology configuration,
- obtaining a type of optimization problem, selected from a set of predefined types of optimization problems, selecting being based on each obtained extrapolated signal-to-noise interference ratio,

- determining the quality of service parameter based on solving the obtained type of optimization problem, and
- transmitting the determined quality of service parameter to a receiving entity.

Such a method allows processing a quality of service (QoS) query message.

Unlike existing methods, such a method may be implemented proactively. For example, such a method may be implemented in specific packet data unit (PDU) probing sessions for probing the NG-RAN, thus evaluating a radio parameter range requested by the query message, before triggering communication messages between base stations and user terminals.

Such a method is executable by one or more base stations of the NG-RAN.

Such a method allows exposing the evaluated range as well as related parameters to an external TSN application function entity (TSN-AF) as an example of a receiving entity

Such a method is not restricted to a specific scheduling or to a specific radio configuration of the NG-RAN base stations since multiple topology configurations may be tested at each base station.

As a result of implementing such a method, quality of service query messages may be triggered and processed even without using dedicated packet data unit sessions.

Such a method allows determining a quality of service parameter based on an extrapolated signal-to-noise interference ratio. The extrapolation may be further refined by being based not only on a currently obtained measurement of a value of reference signal quality parameter, but also on previously obtained statistics relating to previous values of the reference signal quality parameter during the current packet data unit session and/or during previous packet data unit sessions.

Optionally, the method further comprises, at the base station, obtaining configuration data.

The configuration data may provide the base station with information to determine the clusters of user terminals that should be monitored for processing the quality of service message to determine the radio parameter range

The configuration data may provide the base station with information to configure the initial parameters needed for responding to the quality of service query message.

The configuration data may be obtained from higher layer nodes of the 5G core network such as session management function (SMF), access and mobility management function (AMF) or any other node of the 5G core network.

Optionally, at least part of the configuration data is obtained from the quality of service query message.

It is thus possible to obtain from a single query message both the quality of service query and corresponding configuration data, for example as a list of allowed configurations of the base station, to be considered by the base station for providing a response to the query message.

Optionally, the obtained type of optimization problem is selected from the set of predefined types of optimization problems further based on the obtained configuration data.

Each predefined equation or equation system associates, to a given scheduling policy that may be applied in a given base station, a corresponding operating point for a radio parameter that would be offered by the given base station to the given cluster of user terminals

Optionally, the probing reference signal is emitted by the base station.

It is thus possible for the base station to proactively emit a probing reference signal towards the user terminals, such that each user terminal may reply to the base station with an indication of the propagation of said probing reference signal.

Optionally, the probing reference signal is emitted by a neighboring terminal.

Generally, it is possible to probe the NG RAN not only relatively to direct communication between base stations and user terminals, but relatively to any combination of communication links towards a given user terminal, including sidelinks such as a communication between neighboring terminals.

Optionally, the signal-to-noise interference ratio is extrapolated at the base station.

It is thus possible for each base station to extrapolate the signal-to-noise interference ratio for each user terminal it can communicate with, according to any given topology configuration.

Optionally, the signal-to-noise interference ratio is extrapolated at a remote entity of the radio access network system.

It is thus possible to implement the method while minimizing the resulting load on the base stations, by having the extrapolation of the signal-to-noise interference ratios for all base stations be performed by a dedicated entity of the NG-RAN.

The same possibilities of implementing calculations either at each base station or at a remote entity of the NG-RAN may be applied to any of the following:

- selecting a type of optimization problem,
- solving the selected optimization problem, or
- post-processing the solution to the type of optimization problem.

Indeed, optionally, the obtained type of optimization problem is selected from the set of predefined types of optimization problems at the base station.

Optionally, the obtained type of optimization problem is selected from the set of predefined types of optimization problems at a remote entity of the radio access network system.

Optionally, post-processing is performed at the base station configured to communicate with the given terminal.

Optionally, post-processing is performed at a remote entity of the radio access network system.

The purpose of these implementations is to optimize the load of processing resources, memory resources, and available bandwidth used at each base station. Indeed, probing the NG-RAN shall minimally affect the performances of the NG-RAN.

Optionally, solving the obtained type of optimization problem corresponds to determining a configuration of the base station for an optimized propagation of a signal towards each of the at least one given terminal.

It is thus possible to determine a configuration of the base station adapted to provide an optimized quality of service for one or more terminals.

Optionally, the method further comprises, by solving the obtained type of optimization problem, obtaining a determined solution to the obtained type of optimization problem, and post-processing the determined solution to determine the quality of service parameter.

It is thus possible, at each base station, for example to determine and solve a specific optimization problem.

The solutions determined by each base station may be post-processed, such as aggregated and combined, so that the NG-RAN may determine a global quality of service parameter that is representative of a future communication between all base stations, each having a predetermined topology configuration, and all user terminals.

The global quality of service parameter may then be provided to a receiving entity such as the entity having sent the quality of service query message.

Optionally, post-processing triggers a topology reconfiguration of the radio access network system.

It is thus possible to test the quality of service that would be provided for a plurality of topology configurations at a given base station.

Optionally, post-processing comprises comparing the determined quality of service parameter to a reference value, and triggering a topology reconfiguration is based on said comparison.

It is thus possible, for example to check whether a current topology configuration is in line with a predetermined quality of service threshold, and if not, to switch to another topology configuration.

Optionally, after triggering the topology reconfiguration, a new topology configuration is obtained, and the method further comprises:

- obtaining for each of the at least one given terminal a new signal-to-noise interference ratio extrapolated based on a new reference signal quality parameter indicating a quality of a probing reference signal received by said given terminal according to the new topology configuration,
- obtaining a new type of optimization problem, selected from the set of predefined types of optimization problems, based on the new obtained extrapolated signal-to-noise interference ratio,
- determining a new quality of service parameter based on solving the new obtained type of optimization problem, and
- transmitting the new determined quality of service parameter to the receiving entity.

It is thus possible to switch between different possible topology configurations until a quality of service parameter having a sufficient value, or an optimal value, is successfully determined.

Optionally, the method further comprises obtaining, for a plurality of topology configurations of the radio access network, a corresponding proposed value of the quality of service parameter, and post-processing comprises:

- forming a database including the determined solution to the obtained equation as a determined value of the quality of service parameter for the given topology configuration, the database further including the plurality of obtained proposed values of the quality of service parameter, and
- filtering the formed database to determine the quality of service parameter.

It is thus possible to allow not only a single topology configuration but a plurality of topology configurations while providing to the receiving entity, for example, a quality of service parameter range corresponding to said plurality of allowable topology configurations.

The present disclosure also describes a computer-readable storage medium comprising instructions which, when executed by a processor of a communication device, cause the processor to carry out any of the methods hereby described.

The present disclosure also describes a computer program comprising one or more stored sequence/s of instructions that is accessible to a processor of a communication device and which, when executed by the processor, causes the processor to carry out any of the methods hereby described.

The present disclosure also describes a communication device equipped with a processing unit (CPU) operably connected to a memory (MEM) and to a communication interface (CI) with a receiving entity and a transmitting entity, the device being configured to carry out any of the methods hereby described.

BRIEF DESCRIPTION OF THE DRAWINGS

Figure 1    illustrates an exemplary communication system.
Figure 2    illustrates a flowchart of an exemplary method.

DETAILED DESCRIPTION

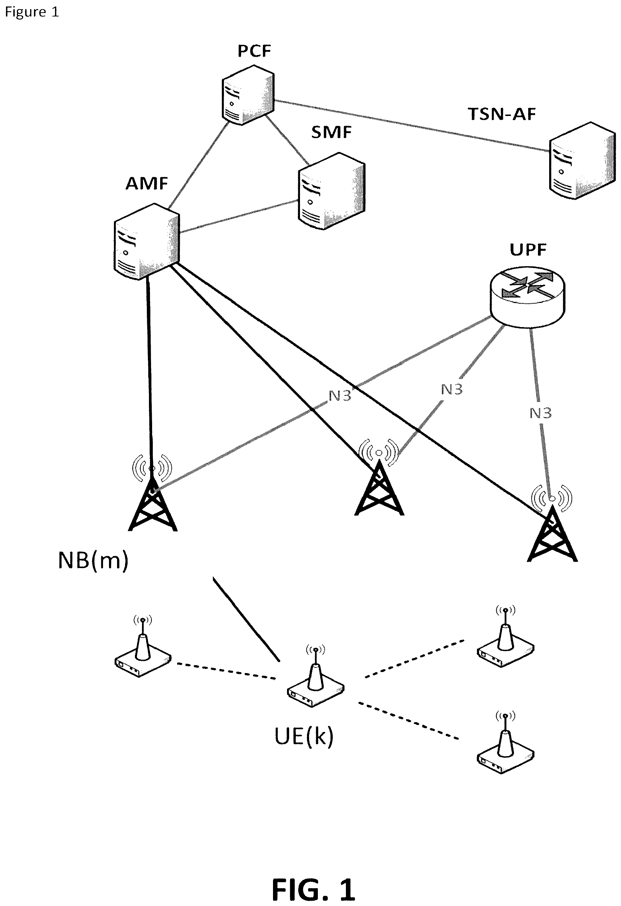

It is now referred to Figure 1 which illustrates a communication system.

The communication system comprises a next-generation radio access network (NG-RAN) and a 5G core network.

The next-generation radio access network (NG-RAN) comprises a plurality of M interconnected node base stations (NB), each communicating with a number of user equipments (UE), also referred to hereafter as user terminals.

The NG-RAN also comprises function entities, such as a user plane function entity (UPF) connected through communication links (N3) with the base stations NB.

More precisely, K user equipments UE(k), with k being a positive integer from 1 to K, are deployed in fixed locations of the network.

The user equipments UE(k) all intend to access to M base stations NB(m), with m being a positive integer from 1 to M, of the NG-RAN.

Each user equipment, also referred to thereafter as user terminal, may be any kind of electronic device on which a user session may be active, such as a smartphone, a laptop, a digital tablet, a desk computer, a game console, etc.

The 5G core network comprises a plurality of function entities, among which an access and mobility management function entity (AMF) interfaced to the node base stations and to:

- a session management function entity (SMF),
- a user plane function entity (UPF),
- a policy control function entity (PCF),
- an authentication server function entity (AUSF) (not represented),
- a user data management entity (UDM) (not represented), and
- one or more application function entities (AF).

Each of the function entities above are well known from the person of ordinary skill in the art.

In this example, one of the application function entities is a time-sensitive network application function (TSN-AF).

A quality of service query message is generated by the TSN-AF. The quality of service query message is a request destined to the NG-RAN for providing, in response to the query message, a radio parameter operating range indicating a quality of service

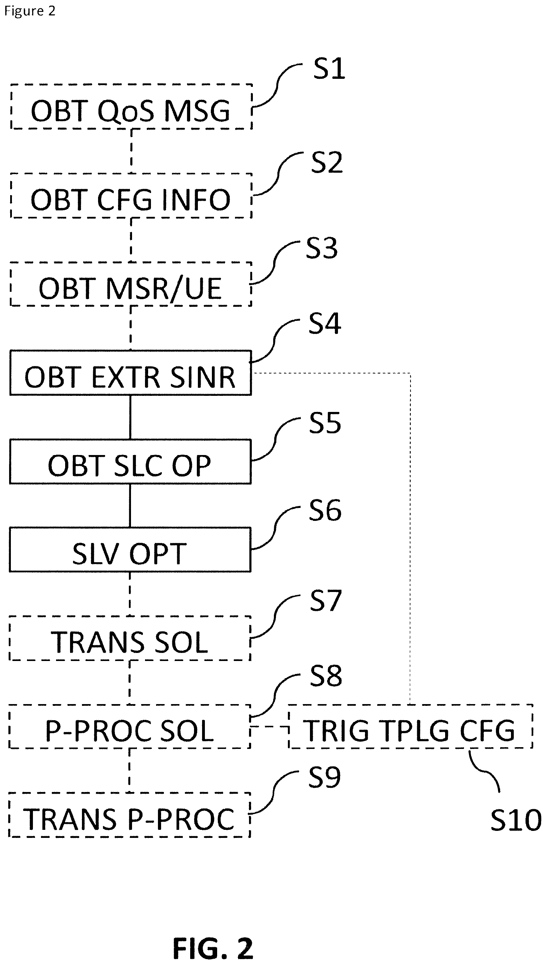

It is now referred to Figure 2, which illustrates an exemplary method for determining a quality of service parameter for at least one given terminal, for example in the communication system illustrated in Figure 1.

The quality of service query message is obtained OBT QoS MSG (S1) by one or more base stations of the NG-RAN.

One or more base stations may further obtain initial configuration information OBT CFG INFO (S2).

The initial configuration information may be received, for example, by one or more base stations of the NG-RAN directly from the TSN-AF.

The initial configuration information may be received, for example, by one or more base stations of the NG-RAN from another function entity of the 5G core network such as the AMF.

For example, a base station of the NG-RAN may receive initial configuration information from a function entity of the 5G core network and forward said initial configuration information to other base stations of the NG-RAN.

The initial configuration information may be obtained along with the quality of service query message or separately.

The initial configuration information may comprise instructions to configure, at the base station receiving the initial configuration information, initial parameters for responding to the quality of service query message.

For example, the initial configuration information may comprise an identification of groups, or clusters, of user terminals that should be monitored by the base station receiving the initial configuration information to determine the radio parameter range.

For example, the initial configuration information may comprise an indication of at least one type of measurement from the user terminals to be monitored.

One or more base stations of the NG-RAN each obtain measurements OBT MSR/UE (S3) from the user terminals (UE) deployed in the radio access network.

Each measurement obtained from a user terminal relates to evaluating how a probing reference signal propagates from at least one source entity to the user terminal, either directly or through a sidelink, with a predetermined network topology.

Base stations and neighboring user terminals are examples of said source entities.

Said predetermined network topology may comprise a predetermined repartition of the user terminals in clusters, for example according to the initial configuration information.

Said predetermined network topology may comprise a predetermined nature and/or a predetermined value of one or more radio parameters at the base stations. For example, some radio parameters may be set to a predetermined value or may be set to remain within a predetermined range, for example according to the initial configuration information.

Said predetermined network topology may comprise a predetermined set of virtual network communication paths between different entities of the NG-RAN, or between an entity of the NG-RAN and a user terminal.

Said predetermined network topology may comprise a predetermined user terminal schedule at the base station. Indeed, each base station NB(m) uses a set of N(m) physical resource blocks (PRB) to schedule the user terminals. The PRB allocated for a user terminal UE(k) in the base station NB(m) are denoted N(k,m).

Measurements may be of different types and may for example relate to a power of the received probing reference signal, to a quality of the received probing reference signal, etc.

For example, a base station may receive from a user terminal a measurement of a power of a probing reference signal emitted by said base station and received by said user terminal.

For example, a base station may receive from a user terminal a measurement of a quality of a probing reference signal emitted by said base station and received by said user terminal.

For example, a base station may receive from a user terminal a measurement of a power of a probing reference signal emitted by a neighboring user terminal and received, through a sidelink, by said user terminal.

For example, a base station may receive from a user terminal a measurement of a quality of a probing reference signal emitted by a neighboring user terminal and received, through a sidelink, by said user terminal.

Of course, each base station may receive from any given user terminal, successively or simultaneously, a plurality, or a combination, of any of the above measurements.

From the measurements received by a given base station from a given user terminal, the given base station obtains OBT EXTR SINR (S4) an extrapolated expected signal to noise and interference ratio (SINR), which is an indication of an expected quality of a future communication between said user terminal and said given base station. The signal to noise and interference ratio SINR, between the user terminal UE(k) and the base station NB(m), is denoted as SINR(k,m). The signal to noise and interference ratio SINR, is extrapolated by at least one entity of the NG RAN, for example by the given base station, by a remote entity of the NG RAN, or in a distributed manner by a network of entities of the NG RAN.

For instance, a given base station may:

- obtain configuration information,
- select a cluster of user terminals among the user terminals deployed in the radio access network based on the configuration information,
- collect measurements from each user terminal of said cluster, and
- autonomously extrapolate, for each said user terminal of said cluster, the signal to noise and interference ratio based on the collected measurements.

For instance:

- each given base station may collect measurements from a plurality of user terminals connected to said given base station and transmit the collected measurement to a central node in the radio access network, which may for example be a base station, or in the 5G core network, then
- the central node may collect all the measurements received from all base stations and, based on said measurements, extrapolate the signal to noise and interference ratios for each user terminal deployed in the radio access network.

Based on the extrapolated signal to noise and interference ratios, at least one optimization problem is selected SLC OPT PB (S5) by at least one entity of the NG-RAN, for example an entity having extrapolated the signal to noise and interference ratio relating to the propagation of a signal between a given base station and a given cluster of user terminals from a set of predetermined optimization problems. As explained before, said entity may be the given base station or another base station or a central node of the NG-RAN or of the 5G core network.

A single optimization problem may be selected, or a subset of optimization problems may be selected.

The selection may be performed for example based on parameters transmitted as part of the received quality of service query message, and/or on additional received configuration parameters.

Each selected optimization problem comprises one or more equations associating, to a given scheduling policy that may be applied in a given base station, a corresponding operating point for a radio parameter that would be offered by the given base station to the given cluster of user terminals.

Each scheduling policy applied in a given base station corresponds to a planned allocation of available physical resource blocks at the given base station as a function of time. According to the scheduling policy, a single resource block may thus be controlled for example to communicate with a single user terminal, or a plurality of resource blocks may be controlled to communicate with a single user terminal, or a single resource block may be controlled to communicate sequentially with a plurality of user terminals, etc.

The selected optimization problem is solved SLV OPT PB (S6) by at least one entity of the NG-RAN, for example by the entity having selected the optimization problem. As explained before, said entity may be the given base station or another base station or a central node of the NG-RAN or of the 5G core network.

Solving the selected optimization problem comprises solving said equation to determine an operating point matching a predetermined criterion.

For example, the selected optimization problem may be solved to determine the optimal, or "best", operating point for said parameter that may be offered by the given base station to the given cluster of user terminals. The "best" operating point may be the operating point minimizing, for example, the sum of the transmission latency towards each user terminal of the given cluster of user terminals, or the operating point minimizing the sum of the transmission jitter towards each said user terminal, or the operating point optimizing the sum of a weighted combination of transmission latency and transmission jitter towards each said user terminal, or the operating point minimizing the standard deviation of the transmission latency between all the user terminals of the given cluster of user terminals, etc.

The selected optimization problem may also be solved to determine the worst operating point for said parameter that may be offered by the given base station to the given cluster of user terminals, using a different scheduling policy. The "worst" operating point may be for example the operating point that is having higher sum of transmission latency for each user terminal of the cluster of user terminals or that is having transmission latencies corresponding to equal resource allocation at the base station.

The best operating point and the worst operating point may form extreme points of an operating range for said parameter that may be offered by the given base station to the given cluster of user terminals.

For instance, each selected optimization problem may be solved in order to determine, at each base station of the NG-RAN, an operating range of the radio parameter that may be offered simultaneously by said base station to each user terminal of the cluster of user terminals it can communicate with.

The solution to the selected optimization problems may be directly transmitted TRANS SOL (S7) by an entity of the NG-RAN to the TSN-AF in a response message to the quality of service query message.

Alternately, or in combination, the solution to the selected optimization problems may be first post-processed P-PROC SOL (S8) by an entity of the NG-RAN, then the post-processed solution may be transmitted TRANS P-PROC (S9) to the TSN-AF in a response message to the quality of service query message.

For example, the operating parameter ranges of each base station may be all collected and post-processed by an entity of the NG-RAN.

Post-processing may include filtering the collected operating parameter ranges to determine an overall operating parameter range across the NG-RAN. The overall operating parameter range may thus be transmitted to the TSN-AF in a response message to the quality of service query message.

Post-processing may include triggering a topology reconfiguration TRIG TPLG CFG (S10).

The topology reconfiguration may be triggered based on at least one condition such as:

- a condition on the collected solutions to the optimization problem, for example a variability exceeding a predetermined threshold in the reported ranges of the radio parameter for the base stations, or
- a condition on the extrapolated SINR, for example a variability exceeding a predetermined threshold in the extrapolated SINR at the base stations.

The topology reconfiguration may include a modification of the clusters of user terminals, a modification of the radio parameters of the base stations, a repetition of coding parameters on the physical layer, i.e. h-ARQ parameters and/or a reconfiguration of virtual paths in the network.

When topology reconfiguration is triggered, the topology is updated, leading to:

- repeating SINR extrapolation taking into account the updated topology, and
- repeating selecting and solving at least an optimization problem, accounting for the updated SINR extrapolation.

The following entities may be deployed in the NG-RAN for collecting the solutions to the optimization problems from all the base stations, such as operating parameter ranges, and trigger a topology reconfiguration:

- a middleware layer entity,
- a multi-access edge computing (MEC) layer entity,
- a network data analytics function entity (NWDAF), and/or
- an elected base station.

EXAMPLE

In the following example, a quality of service query message is received by a base station NB(m), for example from time-sensitive network application function entity (TSN-AF). The quality of service query message is processed by the base station to generate a response message.

Processing the quality of service query message involves extrapolating, for each user terminal UE(k) the base station NB(m) may communicate with, a signal to noise interference ratio SINR(k,m).

Extrapolating the signal to noise interference ratio SINR(k,m) is based on measurements received by the base station NB(m) from each said user terminal UE(k).

For the sake of simplicity, in this example the received measurement from each given user terminal UE(k) is a single radio parameter, namely the transmission delay from said given user terminal UE(k) to the base station NB(m).

In this example, for each user terminal to be deployed in the network, the base station NB(m) determines a transmission delay range by solving two scheduling optimization problems.

In this example, using the extrapolated signal to noise interference ratios SINR(k,m), the base station NB(m) solves a first scheduling optimization problem in order to determine an allocation of the resource N(k,m) which optimizes the sum of the transmission latency of the user terminals UE(k).

In this example, the first optimization problem to be solved at the base station NB(m) is formally stated as

$$\text{maximize} \sum_{k=1}^{K} -\frac{\omega_k B}{N(k,m)B_0 \log\big(1 + \text{SINR}(k,m)\big)}$$

$$\text{s.t.} \sum_{k=1}^{K} N(k,m) \leq N_0, \frac{B}{N(k,m)B_0 \log\big(1 + \text{SINR}(k,m)\big)} \leq \tau_0$$

The following are the parameters of the optimization problem:

- $\omega_k$ are the user terminal weight in the optimization problem, which may be obtained as part of the received configuration information,
- B is the size on the packet to be transmitted by the user terminals. For example, this parameter is 64Bytes for Ethernet communications,
- $B_0$ is the elementary bandwidth of the physical resource block (PRB) SINR(k,m) is the SINR estimated in the step 3 of the invention,
- $\tau_0$ is the maximum latency allowed in the deployment,
- $N_0$ is the maximum number of PRB at the base station NB(m).

Solving the first optimization problem above using the Lagrange multipliers technique leads to the following solution for the resources to be allocated to the user terminal k in the base station m as :

$$N_{opt}(k,m) = \max\left(\left\lceil\frac{\sqrt{\alpha(k,m)}}{\sum_{k=1}^{K}\sqrt{\alpha(k,m)}}N_0\right\rceil, \left\lceil\frac{\alpha(k,m)}{N_0\tau_0}\right\rceil\right)$$

The corresponding transmission delay is given by the following equation:

$$\tau_{opt}(k, m) = \frac{\alpha(k, m)}{N_{opt}(k, m)}$$

The parameter $\alpha(k, m)$ is a function of the different radio parameters as:

$$\alpha(k, m) = \frac{\omega_k B}{B_0 \log(1 + SINR(k, m))}$$

In this example, the base station also determines the worst case delay performance by solving a second optimization problem which corresponds to assuming an equal repartition of the physical resource blocks (PRB) over the user terminals to be deployed.

In this case the worst transmission delay for the user terminal k and the base station m may be determined as

$$\tau_m(k, m) = \frac{K\alpha(k, m)}{N_0}$$

After solving both optimization problems, the base station NB(m) may transmit the optimized delay and the minimum delay parameters ($\tau_{opt}(k, m)$, $\tau_m(k, m)$) for each user terminal UE(k) that is member of the user cluster of the base station NB(m) to a central node that collects the capabilities from the base stations of the deployment.

The central node may proceed with post-processing the received optimized delay parameter and the received minimum delay parameter.

Indeed, the central node may determine, from the capabilities received from each base station, which base stations are showing the best optimization objective $\phi(m) = \sum_{k=1}^{K} - \frac{\omega_k B}{N(k,m) B_0 \log(1+SINR(k,m))}$.

The central node may thus determine, globally across all base stations, the best and worst delay parameters ($\tau_{opt}$, $\tau_m$) for deploying each user equipment UE(k).

The central node may transmit the determined best and worst delay parameters to a receiving entity, which may be for example the time-sensitive network application function entity (TSN-AF).

The transmission capabilities of the base stations may also be used to adjust the de-jittering buffers of the base station and/or the de-jittering buffer in the user plane function (UPF) of the deployment of the base stations.

The delay capabilities may be also used by the NG-RAN for configuring re-routing strategies in the network. For example, the delay capacity of each base station may be stored in the base station and used for re-routing critical packets in the NG-RAN and/or setting up data path with low latency towards the UPF.

The central node that is performing the post processing can be either a base station of the NG-RAN or a node of the core network, such as a AMF node or a network data analytics application function entity (NWDAF)).

**Claims**

1. A method for determining a quality of service parameter for at least one given terminal in a radio access network system (NG-RAN) comprising a plurality of interconnected base stations (NB), each base station being configured to communicate with a corresponding group of terminals (UE) according to a given topology configuration, the method comprising, at a base station, upon obtaining (S1) a quality of service parameter request from a transmitting entity:

   - obtaining (S4) for each of the at least one given terminal a signal-to-noise interference ratio extrapolated based on a reference signal quality parameter indicating a quality of a probing reference signal received by said given terminal according to the given topology configuration,

- obtaining (S5) a type of optimization problem, selected from a set of predefined types of optimization problems, selecting being based on each obtained extrapolated signal-to-noise interference ratio,
- determining the quality of service parameter based on solving (S6) the obtained type of optimization problem, and
- transmitting (S7, S9) the determined quality of service parameter to a receiving entity.

2. The method according to claim 1, further comprising, at the base station, obtaining (S2) configuration data.

3. The method according to claim 2, wherein at least part of the configuration data is obtained from the quality of service parameter request.

4. The method according to claim 2 or 3, wherein the obtained type of optimization problem is selected from the set of predefined types of optimization problems further based on the obtained configuration data.

5. The method according to any of the preceding claims, wherein solving (S6) the obtained type of optimization problem corresponds to determining a configuration of the base station for an optimized propagation of a signal towards each of the at least one given terminal.

6. The method according to any of the preceding claims, wherein the method further comprises, by solving the obtained type of optimization problem, obtaining a determined solution to the obtained type of optimization problem, and post-processing (S8) the determined solution to determine the quality of service parameter.

7. The method according to claim 6, wherein post-processing (S8) is performed at the base station configured to communicate with the given terminal.

8. The method according to claim 6 or 7, wherein post-processing (S8) is performed at a remote entity of the radio access network system.

9. The method according to any of claims 6 to 8, wherein post-processing (S8) triggers (S10) a topology reconfiguration of the radio access network system.

10. The method according to claim 9, wherein post-processing comprises comparing the determined quality of service parameter to a reference value, and triggering (S10) a topology reconfiguration is based on said comparison.

11. The method according to claim 9 or 10, wherein after triggering (S10) the topology reconfiguration, a new topology configuration is obtained, and the method further comprises:

- obtaining for each of the at least one given terminal a new signal-to-noise interference ratio extrapolated based on a new reference signal quality parameter indicating a quality of a probing reference signal received by said given terminal according to the new topology configuration,
- obtaining a new type of optimization problem, selected from the set of predefined types of optimization problems, based on the new obtained extrapolated signal-to-noise interference ratio,
- determining a new quality of service parameter based on solving the new obtained type of optimization problem, and
- transmitting the new determined quality of service parameter to the receiving entity.

12. The method according to any of claims 6 to 11, wherein the method further comprises obtaining, for a plurality of topology configurations of the radio access network, a corresponding proposed value of the quality of service parameter, and post-processing (S8) comprises:

- forming a database including the determined solution to the obtained equation as a determined value of the quality of service parameter for the given topology configuration, the database further including the plurality of obtained proposed values of the quality of service parameter, and
- filtering the formed database to determine the quality of service parameter.

13. A computer-readable storage medium comprising instructions which, when executed by a processor of a communication device, cause the processor to carry out a method according to any of claims 1 to 12.

**14.** A computer program comprising one or more stored sequence/s of instructions that is accessible to a processor of a communication device and which, when executed by the processor, causes the processor to carry out a method according to any of claims 1 to 12.

**15.** A communication device equipped with a processing unit (CPU) operably connected to a memory (MEM) and to a communication interface (CI) with a receiving entity and a transmitting entity, the device being configured to carry out a method according to any of claims 1 to 12.

Figure 1

PCF

TSN-AF

SMF

AMF

UPF

N3

N3

N3

NB(m)

UE(k)

## FIG. 1

Figure 2

FIG. 2

Europäisches
Patentamt

European
Patent Office

Office européen
des brevets

# EUROPEAN SEARCH REPORT

Application Number

EP 20 31 5065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 129 862 B1 (WU ZHUNG-HAN [US] ET AL) 13 November 2018 (2018-11-13) * column 19, line 46 - column 20, line 3 * | 1-15 | INV. H04W28/24 |
| A | US 2017/311189 A1 (ALMALFOUH SAMI M [US] ET AL) 26 October 2017 (2017-10-26) * paragraph [0062] * | 1,13-15 | |
| A | US 2007/008902 A1 (YARAMADA SARITHA [US] ET AL) 11 January 2007 (2007-01-11) * paragraph [0034] * | 1-15 | |
| A | WO 2015/097481 A1 (RANPLAN WIRELESS NETWORK DESIGN LTD [GB]) 2 July 2015 (2015-07-02) * page 3 * * page 11 * | 12 | |

TECHNICAL FIELDS
SEARCHED (IPC)

H04W

The present search report has been drawn up for all claims

| Place of search | Date of completion of the search | Examiner |
|---|---|---|
| Munich | 9 September 2020 | Emander, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 31 5065

09-09-2020

| Patent document cited in search report | | Publication date | Patent family member(s) | | Publication date |
|---|---|---|---|---|---|
| US 10129862 | B1 | 13-11-2018 | NONE | | |
| US 2017311189 | A1 | 26-10-2017 | CN | 109076369 A | 21-12-2018 |
| | | | DE | 112017002187 T5 | 03-01-2019 |
| | | | KR | 20180131607 A | 10-12-2018 |
| | | | US | 2017311189 A1 | 26-10-2017 |
| | | | US | 2019124532 A1 | 25-04-2019 |
| | | | WO | 2017189243 A1 | 02-11-2017 |
| US 2007008902 | A1 | 11-01-2007 | CN | 101258714 A | 03-09-2008 |
| | | | CN | 104618969 A | 13-05-2015 |
| | | | EP | 1925132 A1 | 28-05-2008 |
| | | | JP | 4746099 B2 | 10-08-2011 |
| | | | JP | 2009500984 A | 08-01-2009 |
| | | | KR | 20080035605 A | 23-04-2008 |
| | | | TW | I327698 B | 21-07-2010 |
| | | | US | 2007008902 A1 | 11-01-2007 |
| | | | WO | 2007008751 A1 | 18-01-2007 |
| WO 2015097481 | A1 | 02-07-2015 | CN | 103702338 A | 02-04-2014 |
| | | | EP | 3087776 A1 | 02-11-2016 |
| | | | US | 2016323753 A1 | 03-11-2016 |
| | | | WO | 2015097481 A1 | 02-07-2015 |

EPO FORM P0459

**EP 3 886 495 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 20305195